# DEMANDE DE BREVET EUROPEEN

(11) **EP 1 559 638 A2**
(43) Date de publication de la demande: **03.08.2005**
(21) Numéro de dépôt: 05290222.8
(22) Date de dépôt: 01.02.2005
(51) Int. Cl.: B62D 25/12, F16F 3/04

(54) **Dispositif pour le soulevement d'un capot de vehicule et articulation de capot de vehicule le comprenant**

(30) Priorité: 02.02.2004 FR 0400972
(71) Demandeur: Oxford Automotive Mecanismes et Decoupage Fin, 78997 Elancourt Cedex (FR)
(72) Inventeur: Guillerot, Thierry, 91190 Gif sur Yvette (FR)
(74) Mandataire: Neyret, Daniel

(57) **Abrégé**

Dispositif pour le soulèvement d'un capot lors d'un choc comportant :
- une tige (25);
- un bâti (2) solidaire de la carrosserie, dont une paroi supérieure (3) comporte un évidement (4) où s'insère la tige (25), ledit bâti renfermant des moyens de verrouillage de ladite tige (25) et des moyens pour les déverrouiller et comportant un prolongement vertical (14) sur sa paroi supérieure (3) ;
- un ressort inférieur (15) reposant sur le bâti (2) et agissant sur une pièce annulaire (16), ledit ressort inférieur (15) et ladite pièce annulaire (16) étant disposés autour dudit prolongement vertical (14) ;
- un ressort supérieur (24) disposé autour dudit prolongement vertical (14), agissant sur la tige (25) et sur ladite pièce annulaire (16), lesdits ressorts (15, 24) se trouvant à l'état comprimé lorsque la tige (25) est verrouillée dans l'évidement (4).

Système d'articulation du capot comportant au moins un dispositif du type précédent.

## Description

L'invention concerne le domaine des systèmes de retenue et d'articulation du capot de véhicules automobiles.

Un souci de plus en plus présent chez les constructeurs automobiles est de prévoir sur leurs véhicules des systèmes ayant pour fonction de limiter les blessures infligées à un piéton lors d'un choc frontal. A cet effet, l'un des éléments sur lesquels on peut agir est le mécanisme qui maintient le capot en place sur la carrosserie du véhicule. Il est préférable que, lors d'un choc avec un piéton (ou juste avant ce choc si des moyens de détection de son imminence sont prévus sur le véhicule), ce mécanisme se désengage d'une manière qui autorise une élévation importante du capot susceptible d'absorber le choc.

On peut, à cet effet, imaginer que le capot se soulève avant le choc ou lors du choc sous l'action d'une tige déplacée par un ressort qu'un dispositif maintient à l'état comprimé sous le capot fermé. Ce ressort devrait avoir une puissance suffisante pour soulever la tige de manière instantanée, et une longueur à l'état étiré suffisante pour que ce soulèvement s'effectue avec une course importante. Cependant, la satisfaction simultanée de ces deux exigences à l'aide d'un ressort unique conduirait à conférer à ce ressort une longueur à l'état compressé relativement importante. Cela est défavorable à la facilité d'implantation du dispositif sur un véhicule, particulièrement si le véhicule n'a pas été dès le départ conçu pour l'utilisation de ce dispositif.

Le but de l'invention est de proposer un dispositif à ressort efficace et peu encombrant, permettant de faire monter un capot de véhicule juste avant l'impact du piéton.

A cet effet, l'invention a pour objet un dispositif pour le soulèvement d'un capot de véhicule suite à la détection d'un choc, caractérisé en ce qu'il comporte :
- une tige pouvant soulever le capot ou un support fixé audit capot ;
- un bâti solidaire de la carrosserie du véhicule, dont une paroi supérieure comporte un évidement dans lequel vient s'insérer la tige, ledit bâti renfermant des moyens de verrouillage de ladite tige dans ledit évidement et des moyens pour déclencher le déverrouillage desdits moyens de verrouillage, et comportant un prolongement vertical sur sa paroi supérieure ;
- un ressort inférieur reposant sur la paroi supérieure du bâti et agissant sur une portée d'une pièce annulaire, ledit ressort inférieur et ladite pièce annulaire étant disposés autour dudit prolongement vertical du bâti ;
- un ressort supérieur disposé autour dudit prolongement vertical du bâti, dont l'extrémité supérieure agit sur la tige et dont l'extrémité inférieure agit sur une portée de ladite pièce annulaire, lesdits ressorts se trouvant à l'état comprimé lorsque la tige est verrouillée dans l'évidement du bâti.

L'extrémité inférieure du ressort supérieur peut agir sur ladite pièce annulaire par le biais d'au moins un ensemble comportant un ressort intermédiaire et une pièce annulaire intermédiaire disposés autour dudit prolongement vertical du bâti.

Les moyens de verrouillage de la tige peuvent être constitués par une encoche pratiquée dans la tige, une perforation de la paroi de l'évidement du bâti, une cale disposée dans ladite perforation et dont une portion pénètre dans ladite encoche lorsque le dispositif est verrouillé, une pièce portant une patte poussant une portion de la cale dans l'encoche lorsque la tige est verrouillée, ladite patte portant un logement pour la cale, des moyens pour retenir la pièce portant une patte lorsque le dispositif est verrouillé, et des moyens pour déplacer la pièce portant une patte lors du déverrouillage de la tige de manière à placer le logement de la patte face à la cale.

Lesdits moyens pour retenir la pièce lorsque le dispositif est verrouillé peuvent comporter une ventouse magnétique, et lesdits moyens pour déplacer la pièce lors du déverrouillage de la tige peuvent comporter un ressort et des moyens pour faire circuler un courant dans la ventouse magnétique.

Lesdits moyens pour déplacer la pièce portant une patte lors du déverrouillage du dispositif peuvent comporter un système pyrotechnique.

De préférence, chacun desdits ressorts supérieur et intermédiaire, lorsque le dispositif est verrouillé, a son extrémité inférieure située plus bas que l'extrémité supérieure du ressort de rang qui lui est inférieur.

Au moins deux desdits ressorts peuvent être de forces différentes.

Il peut comporter un ressort intermédiaire, dont le diamètre est supérieur à celui du ressort supérieur et à celui du ressort inférieur.

L'invention a également pour objet un système d'articulation du capot d'un véhicule, caractérisé en ce qu'il comporte au moins un dispositif du type précédent.

Comme on l'aura compris, l'invention consiste à prévoir, au lieu d'un ressort unique provoquant l'ascension de la tige destinée à soulever le capot, une pluralité de tels ressorts agissant successivement. Le premier de ces ressorts est un ressort puissant qui peut soulever la tige immédiatement après sa libération, mais sur une longueur relativement limitée. Le ou les autres ressorts, moins puissants, ont essentiellement pour fonction de prolonger la course de la tige pour lui donner l'ampleur désirée.

L'invention sera mieux comprise à la lecture de la description qui suit, donnée en référence aux figures annexées suivantes :
- la figure 1 qui montre en coupe un exemple de dispositif selon l'invention au repos avec les ressorts comprimés ;
- les figures 2 et 3 qui montrent de la même façon ce dispositif à deux stades intermédiaires de son fonctionnement après déverrouillage du dispositif ;
- la figure 4 qui montre de la même façon ce dispositif au stade final de son fonctionnement.

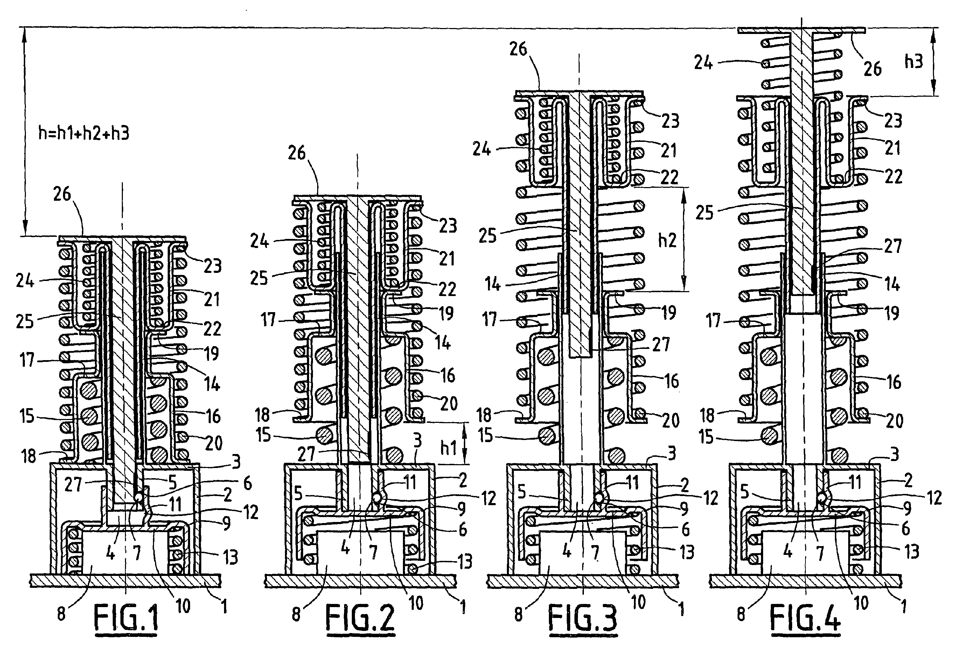

La figure 1 montre un exemple de dispositif selon l'invention au repos, à l'état verrouillé.

A la carrosserie 1 du véhicule, par exemple au voisinage d'un bord du capot, est fixé un bâti 2 dont la forme extérieure est sensiblement cylindrique, et qui présente au centre de sa paroi supérieure 3 un évidement 4. Dans la paroi verticale 5 de cet évidement 4 est ménagée une perforation 6 dans laquelle est logée une cale 7 en forme de bille (par exemple) dont une partie affleure à l'intérieur de l'évidement 4. La dimension minimale de la perforation 6 est inférieure à la dimension maximale de la cale 7, de sorte que la cale 7 ne peut tomber dans l'évidement 4.

A l'intérieur du bâti 2 se trouve une ventouse magnétique 8 qui, lorsqu'aucun courant électrique ne la parcourt, retient contre elle une pièce métallique 9, sur la face supérieure 10 de laquelle est ménagée une patte 11. Cette patte 11 comporte un logement 12 dans lequel la cale 7 peut venir s'insérer lorsque le logement 12 et la perforation 6 viennent en correspondance l'une de l'autre. Cette correspondance est réalisée lorsque la détection d'un choc survenant (ou sur le point de survenir) sur le capot du véhicule, réalisée par des moyens connus en eux-mêmes, déclenche l'envoi d'un courant électrique dans la ventouse magnétique 8. Alors la ventouse 8 ne retient plus la pièce 9 contre elle, et la pièce 9 peut monter en quelques dizaines de millisecondes sous l'action d'un premier ressort 13 de raideur inférieure à la tenue de la ventouse magnétique. Au cours de l'ascension de la pièce 9, la patte 11 vient buter contre la paroi supérieure 3 du bâti 2, de sorte que la correspondance du logement 12 de la patte 11 et de la perforation 6 de la paroi 5 de l'évidement 4 du bâti 2 est réalisée, avec les effets qui seront vus plus loin.

Le bâti 2 comporte également un prolongement cylindrique 14 ménagé sur sa paroi supérieure 3. Autour de ce prolongement 14 est disposé un deuxième ressort 15 (dit « ressort inférieur »), de forte raideur. Il repose sur la paroi supérieure 3 du bâti 2.

Autour du prolongement 14 du bâti 2 est également disposée une première pièce annulaire 16 qui, lorsqu'une pression verticale est exercée sur elle, met en compression le deuxième ressort 15 par l'intermédiaire d'une portée centrale 17. Cette première pièce annulaire 16 comporte également une portée inférieure 18 susceptible de venir au contact de la paroi supérieure 3 du bâti 2, et une portée supérieure 19.

Autour de la première pièce annulaire 16 est disposé un troisième ressort 20 (dit « ressort intermédiaire »), d'une raideur inférieure à celle du deuxième ressort 15. Il repose sur la portée supérieure 19 de la première pièce annulaire 16.

Une deuxième pièce annulaire 21 (dite « pièce annulaire intermédiaire ») est disposée sur le prolongement 14. Elle comporte une portée inférieure 22 qui peut exercer une pression sur la portée supérieure 19 de la première pièce annulaire 16, de manière à amener la portée inférieure 18 de celle-ci contre la paroi supérieure 3 du bâti 2 en comprimant le deuxième ressort 15. Elle comporte également une portée supérieure 23 qui, lorsque la deuxième pièce annulaire 21 est dans sa position la plus basse, est apte à mettre en compression le troisième ressort 20.

Sur la deuxième pièce annulaire 21 est disposé un quatrième ressort 24 (dit « ressort supérieur ») qui repose sur la portée inférieure 22 de la deuxième pièce annulaire 21.

A l'intérieur de la cavité 4 est insérée une tige 25 destinée à soulever le capot (non représenté) du véhicule lorsque le dispositif est déverrouillé. A sa partie supérieure, elle comporte une portée 26 qui peut exercer une pression sur la portée supérieure 23 de la deuxième pièce annulaire 21 et/ou sur le quatrième ressort 24, de manière à amener la portée inférieure 22 de la deuxième pièce annulaire 21 contre la portée supérieure 19 de la première pièce annulaire 16 en comprimant le troisième ressort 20. Dans sa partie inférieure, la tige 25 comporte une encoche 27 dans laquelle peut pénétrer la partie de la cale 7 qui émerge dans l'évidement 4 lorsque la cale 7 est poussée par la patte 11. Lorsque le dispositif est verrouillé et le capot fermé, la portée 26 se trouve au contact du capot, ou légèrement en-dessous de celui-ci.

Lorsque le dispositif est verrouillé, tous les ressorts 13, 15, 20, 24 sont maintenus à l'état comprimé, du fait que la pièce 9 est retenue contre la ventouse magnétique 8 et que la tige 25 est bloquée par la cale 7 qui pénètre dans son encoche 27 et empêche son ascension.

On notera que de préférence, comme dans l'exemple représenté, les différents ressorts 15, 20, 24 et pièces annulaires 16, 21 ont des dimensions telles que lorsque le dispositif est verrouillé, l'extrémité inférieure d'un ressort donné se trouve plus bas que l'extrémité supérieure du ressort de rang qui lui est inférieur. Autrement dit, les ressorts 15, 20, 24 sont comme « imbriqués » les uns dans les autres. On peut ainsi conférer une bonne compacité au dispositif à l'état verrouillé. De plus, dans l'exemple représenté, le ressort intermédiaire 20 a un diamètre plus grand que le ressort supérieur 24 et le ressort inférieur 15, ce qui accentue encore la compacité du dispositif.

Lorsque l'imminence du choc d'un piéton contre le capot du véhicule est détectée par des moyens connus en eux-mêmes, cette détection déclenche le passage dans la ventouse magnétique 8 d'un courant électrique. Ce courant démagnétise la ventouse 8, et la pièce métallique 9 n'est plus retenue. Le premier ressort 13 peut alors se détendre, et il pousse la pièce métallique 9 vers le haut, de façon que la patte 11 vienne heurter la paroi supérieure 3 du bâti 2. Le dispositif se retrouve alors dans la configuration de la figure 2. Les dimensions des différentes pièces en jeu sont telles que lorsque la pièce métallique 9 est poussée vers le haut et (dans l'exemple représenté, mais ce n'est pas obligatoire) est bloquée dans son ascension par le choc de la patte 11 contre la paroi supérieure 3 du bâti 2, le logement 12 ménagé sur la patte 11 se retrouve face à la cale 7. Celle-ci a donc la possibilité de venir s'y placer, en sortant de l'encoche 27 de la tige 25. De cette façon, la tige 25 est débloquée, et ne peut plus s'opposer à la détente des trois autres ressorts 15, 20, 24.

La figure 2 montre le dispositif peu après la libération de la tige 25, lorsque celle-ci a commencé à soulever le capot. Le deuxième ressort 15 s'est complètement détendu et a soulevé la première pièce annulaire 16 sur une hauteur h1 correspondant à la différence de longueur du deuxième ressort 15 entre son état comprimé et son état détendu. Pendant ce temps, les longueurs des deux autres ressorts 20, 24 n'ont que peu varié. Par conséquent, la deuxième pièce annulaire 21 et la tige 25 ont été soulevées de la même hauteur h1. Le capot a, lui aussi, été soulevé par la tige 25 d'une hauteur h1 diminuée de l'écart qui existait éventuellement entre le capot et la portée 26 lorsque le capot était fermé.

La figure 3 montre le dispositif au stade suivant de son fonctionnement, après détente complète du troisième ressort 20. Celui-ci a soulevé la deuxième pièce annulaire 21 sur une hauteur h2 correspondant à la différence de longueur du troisième ressort 20 entre son état comprimé et son état détendu. Pendant ce temps, la longueur du quatrième ressort 24 n'a que peu varié. Par conséquent, la tige 25 et le capot ont été soulevés de la même hauteur h2.

La figure 4 montre le dispositif au stade final de son fonctionnement, après détente complète du quatrième ressort 24. Celui-ci a soulevé la tige 25 sur une hauteur h3 correspondant à la différence de longueur du quatrième ressort 24 entre son état comprimé et son état détendu.

Au total, la portée 26 de la tige 25 a progressé vers le haut d'une hauteur h = h1 + h2 + h3, et a donc pu soulever le capot d'une hauteur équivalente (minorée de l'intervalle éventuel existant entre la portée 26 et le capot, lorsque le capot est fermé et le dispositif selon l'invention verrouillé). Le capot se retrouve avec ses bords dans une position élevée. Cette élévation favorise l'absorption d'énergie lors du choc, par exemple contre un piéton. Le choc peut ainsi être mieux absorbé que si le capot restait maintenu à une altitude fixe car les ressorts se recompriment sous l'effet du choc en absorbant de l'énergie jusqu'à retrouver leurs positions d'origine, et les conséquences en sont moins graves pour le piéton percuté. Ceci est un avantage très important de l'invention par rapport aux dispositifs d'éjection du capot connus.

On voit également sur les figures qu'avantageusement, le prolongement 14 du bâti 2 joue un rôle de guide pour la tige 25 et les pièces annulaires 16, 21 lors de leur ascension.

Il est entendu que les différentes étapes du fonctionnement du dispositif qui ont été décrites peuvent se chevaucher : la détente d'un ressort peut débuter avant que celle du ressort le plus fort soit achevée.

On peut également intégrer au dispositif des moyens d'absorption de l'énergie de la tige 25 en fin de sa course d'éjection, tels qu'une butée ou un ralentisseur quelconque, dans le but de limiter assurément l'ampleur de cette course d'éjection.

Par rapport à un système d'éjection d'une force égale et procurant à la tige 25 une course h égale, mais qui ne comporterait qu'un ressort unique agissant directement sur la tige 25, le système selon l'invention présente l'avantage d'un moindre encombrement à l'état verrouillé. Le système est donc plus facile à loger dans le véhicule, surtout si celui-ci n'est pas, au départ, conçu pour recevoir un tel système.

Quant à l'emplacement du dispositif selon l'invention par rapport au capot, plusieurs options sont possibles.

Il est possible d'intégrer un dispositif selon l'invention à chacune des articulations du capot. Ces articulations deviennent ainsi un peu plus encombrantes que des articulations normales. S'il y a suffisamment d'espace disponible pour loger les nouvelles articulations, elles peuvent être éventuellement adaptées à un véhicule existant non initialement prévu pour recevoir un dispositif d'éjection du capot. Pour un bon déroulement de l'éjection du capot, il faut que tous les dispositifs fonctionnent de façon exactement simultanée.

Il est également possible de dissocier complètement les fonctions d'articulation et d'éjection du capot. Dans ce cas, on peut prévoir soit d'équiper le véhicule d'un dispositif d'éjection unique placé par exemple à l'aplomb de la zone centrale de l'un des bords du capot, soit de deux tels dispositifs placés à l'aplomb des zones latérales du capot (avec, là encore, la nécessité d'un déclenchement rigoureusement simultané des deux dispositifs).

A titre d'exemple non limitatif, un dispositif conçu pour l'éjection d'un capot pesant environ 10kg à l'aide de ce seul dispositif peut posséder les caractéristiques suivantes :
- longueur à l'état verrouillé de 100mm environ (un dispositif utilisant un ressort unique et procurant la même course à la tige 25 aurait une longueur à l'état verrouillé de 300mm environ) ;
- ressort inférieur 15 de force 300daN, de diamètre 35mm, long de 40mm à l'état comprimé et 60mm à l'état détendu ;
- ressort intermédiaire 20 de force 150 daN, de diamètre 70mm, long de 100mm à l'état comprimé et 150mm à l'état détendu ;
- ressort supérieur 24 de force 70 daN, de diamètre 35mm, long de 30mm à l'état comprimé et 60mm à l'état détendu.

Cet ensemble permet de soulever la tige 25 de 100mm environ en un temps de 30ms.

Dans cet exemple de dispositif, on remarque que les trois ressorts 15, 20, 24 ont des forces différentes, en l'occurrence décroissantes du ressort inférieur 15 vers le ressort supérieur 24. Par rapport au cas où tous les ressorts 15, 20, 24 auraient la même force, cela permet de procurer à la courbe « course = f (effort d'absorption du choc) » une allure non linéaire, et ainsi de maîtriser l'effort d'absorption au fil du déroulement du choc. Ainsi, dans l'exemple décrit, le dispositif n'oppose qu'une faible résistance au début du choc correspondant à la compression du ressort supérieur 24. Elle serait suffisante pour absorber un choc léger sans dommages pour le piéton. C'est donc seulement pour les chocs les plus importants que les compressions des ressorts intermédiaire 20 et inférieure 15 deviennent significatives. De manière générale, pour gérer le déroulement de l'absorption du choc, on conseille de conférer des forces différentes à au moins deux des ressorts du dispositif.

Le dispositif qui a été décrit en détail n'est qu'un exemple de dispositif selon l'invention. Comme variantes de l'invention, on pourrait imaginer, notamment :
- de prévoir seulement deux ressorts agissant sur la tige 25 solidaire du capot, ou inversement d'en prévoir plus de trois ;
- de remplacer le système de déverrouillage utilisant une cale 7 escamotable par un autre système fonctionnellement équivalent ;
- de remplacer la ventouse magnétique 8 déclenchant le déplacement de la pièce 9 notamment par un système pyrotechnique utilisant une cartouche d'explosif ; la ventouse magnétique est cependant avantageuse, en ce qu'elle n'utilise pas de matière dangereuse à manipuler et sujette au vieillissement, et en ce qu'elle peut être rendue immédiatement fonctionnelle après un réarmage du dispositif devant faire suite à un choc léger qui n'a pas entraîné de déformation importante du capot ;
- d'implanter le dispositif de déverrouillage non pas sous les divers ressorts, mais en leur intérieur, de manière à réduire l'encombrement en hauteur du dispositif ; la géométrie de l'ensemble devrait être modifiée en conséquence et il aurait alors une largeur plus importante que dans l'exemple représenté.

## Revendications

1. Dispositif pour le soulèvement d'un capot de véhicule suite à la détection d'un choc, **caractérisé en ce qu'**il comporte :
- une tige (25) pouvant soulever le capot ou un support fixé audit capot ;
- un bâti (2) solidaire de la carrosserie du véhicule, dont une paroi supérieure (3) comporte un évidement (4) dans lequel vient s'insérer la tige (25), ledit bâti renfermant des moyens de verrouillage de ladite tige (25) dans ledit évidement (4) et des moyens pour déclencher le déverrouillage desdits moyens de verrouillage, et comportant un prolongement vertical (14) sur sa paroi supérieure (3) ;
- un ressort inférieur (15) reposant sur la paroi supérieure (3) du bâti (2) et agissant sur une portée (17) d'une pièce annulaire (16), ledit ressort inférieur (15) et ladite pièce annulaire (16) étant disposés autour dudit prolongement vertical (14) du bâti (2) ;
- un ressort supérieur (24) disposé autour dudit prolongement vertical (14) du bâti (2), dont l'extrémité supérieure agit sur la tige (25) et dont l'extrémité inférieure agit sur une portée (19) de ladite pièce annulaire (16), lesdits ressorts (15, 24) se trouvant à l'état comprimé lorsque la tige (25) est verrouillée dans l'évidement (4) du bâti (2).

2. Dispositif selon la revendication 1, **caractérisé en ce que** l'extrémité inférieure du ressort supérieur (24) agit sur ladite pièce annulaire (16) par le biais d'au moins un ensemble comportant un ressort intermédiaire (20) et une pièce annulaire intermédiaire (21) disposés autour dudit prolongement vertical (14) du bâti (2).

3. Dispositif selon la revendication 1 ou 2, **caractérisé en ce que** les moyens de verrouillage de la tige (25) sont constitués par une encoche (27) pratiquée dans la tige (25), une perforation (6) de la paroi (5) de l'évidement (4) du bâti (2), une cale (7) disposée dans ladite perforation (6) et dont une portion pénètre dans ladite encoche (27) lorsque le dispositif est verrouillé, une pièce (9) portant une patte (11) poussant une portion de la cale (7) dans l'encoche (27) lorsque la tige (25) est verrouillée, ladite patte portant un logement (12) pour la cale (7), des moyens pour retenir la pièce (9) portant une patte (11) lorsque le dispositif est verrouillé, et des moyens pour déplacer la pièce (9) portant une patte (11) lors du déverrouillage de la tige (25) de manière à placer le logement (12) de la patte (11) face à la cale (7).

4. Dispositif selon la revendication 3, **caractérisé en ce que** lesdits moyens pour retenir la pièce (9) lorsque le dispositif est verrouillé comportent une ventouse magnétique (8), et **en ce que** lesdits moyens pour déplacer la pièce (9) lors du déverrouillage de la tige (25) comportent un ressort (13) et des moyens pour faire circuler un courant dans la ventouse magnétique (8).

5. Dispositif selon la revendication 3, **caractérisé en ce que** lesdits moyens pour déplacer la pièce (9) portant une patte (11) lors du déverrouillage du dispositif comportent un système pyrotechnique.

6. Dispositif selon l'une des revendications 1 à 5, **caractérisé en ce que** chacun desdits ressorts supérieur (24) et intermédiaire (20), lorsque le dispositif est verrouillé, a son extrémité inférieure située plus bas que l'extrémité supérieure du ressort de rang qui lui est inférieur.

7. Dispositif selon l'une des revendications 1 à 6, **caractérisé en ce que** au moins deux desdits ressorts (15, 20, 24) sont de forces différentes.

8. Dispositif selon l'une des revendications 1 à 7, **caractérisé en ce qu'**il comporte un ressort intermédiaire (20), dont le diamètre est supérieur à celui du ressort supérieur (24) et à celui du ressort inférieur (15).

9. Système d'articulation du capot d'un véhicule, **caractérisé en ce qu'**il comporte au moins un dispositif selon l'une des revendications 1 à 8.
